(19) **Europäisches Patentamt**

**European Patent Office**

**Office européen des brevets**

(11) **EP 1 088 279 B1**

(12) **FASCICULE DE BREVET EUROPEEN**

(45) Date de publication et mention
de la délivrance du brevet:
**14.04.2004 Bulletin 2004/16**

(51) Int Cl.7: **G06F 17/30**, G06K 9/52,
G06T 9/00

(21) Numéro de dépôt: **99925074.9**

(22) Date de dépôt: **14.06.1999**

(86) Numéro de dépôt international:
**PCT/FR1999/001402**

(87) Numéro de publication internationale:
**WO 1999/066426 (23.12.1999 Gazette 1999/51)**

(54) **PROCEDE DE RECHERCHE D'IMAGES, FONDE SUR UNE INDEXATION INVARIANTE DES IMAGES**

VERFAHREN ZUM SUCHEN VON BILDERN, BASIEREND AUF EINER INVARIANTEN INDIZIERUNG DER BILDER

IMAGE SEARCH METHOD, BASED ON IMAGE INVARIANT INDEXING

(84) Etats contractants désignés:
**DE FR GB IT NL**

(30) Priorité: **15.06.1998 FR 9807494**

(43) Date de publication de la demande:
**04.04.2001 Bulletin 2001/14**

(73) Titulaire: **COMMISSARIAT A L'ENERGIE ATOMIQUE**
**75752 Paris Cédex 15 (FR)**

(72) Inventeurs:
• **ESSAFI, Hassane**
**F-91400 Orsay (FR)**
• **MARIE-JULIE, Jean-Michel**
**F-94400 Vitry sur Seine (FR)**

(74) Mandataire: **Ilgart, Jean-Christophe et al**
**BREVALEX**
**3, rue du Docteur Lancereaux**
**75008 Paris (FR)**

(56) Documents cités:
**FR-A- 2 753 820**

• **DAVOINE F ET AL: "FRACTAL IMAGE COMPRESSION BASED ON DELAUNAY TRIANGULATION AND VECTOR QUANTIZATION" IEEE TRANSACTIONS ON IMAGE PROCESSING, vol. 5, no. 2, février 1996 (1996-02), pages 338-346, XP000678934**
• **FISHER Y: "FRACTAL IMAGE COMPRESSION" FRACTALS, vol. 2, no. 3, 1994, pages 347-361, XP000613113**

**Description**

L'invention concerne un procédé de recherche d'images dont chacune a été enregistrée dans une base de données sous forme d'un index d'informations structurées et de façon à favoriser une recherche ultérieure d'un élément déterminé sur les images de cette base de données.

Une technique facile à mettre en oeuvre pour rechercher un détail déterminé sur une image consiste à consulter un catalogue de description des images par un texte ou par des mots-clefs, mais l'établissement du catalogue prend du temps et il n'est pas possible de garantir que les images seront décrites avec objectivité et que les détails auxquels on s'intéressera dans l'avenir seront perçus dès ce moment. Enfin, la description sera généralement trop peu précise car les détails seront généralement identifiés par leur catégorie (bâtiment, véhicule, personnage, etc.), alors qu'on demandera en général un individu particulier de cette catégorie, ce qui obligera à examiner toutes les images sur lesquelles cette catégorie d'éléments sera présente.

Une autre solution consiste à rechercher un objet en décrivant son contour et sa texture et en le recherchant dans la banque de données d'images. Il faut alors extraire les informations correspondantes sur des modélisations numériques des images discrétisées en points. Il n'existe malheureusement pas de méthode d'extraction de contour ou de texture d'objet qui soit efficace dans tous les cas, et ces méthodes sont mises en échec quand les objets sont partiellement masqués, dans l'ombre ou quand ils sont éclairés de façons différentes sur l'échantillon fourni en vue de la recherche et sur l'image sur laquelle cet échantillon doit être retrouvé.

Une autre méthode consiste à comparer l'échantillon fourni avec chacune des parties de chacune des images, la comparaison portant sur les teintes des points de l'échantillon et des points des images, mais cette méthode est impraticable pour une recherche un peu importante.

Une. dernière catégorie de méthodes, à laquelle appartient l'invention, consiste à modéliser les images par autant d'index représentant des caractéristiques de l'image. L'échantillon à rechercher sera modélisé de la même manière pour donner un index de forme analogue et la comparaison portera sur les index. Si une comparaison est jugée positive, l'image correspondante sera extraite et examinée.

On s'est récemment beaucoup intéressé à la compression des images en utilisant leurs propriétés fractales, pour donner des index qui occupent peu de place en mémoire tout en permettant de reconstruire ultérieurement l'image avec une qualité satisfaisante ; ces index peuvent, comme on le verra, servir dans l'invention pour les comparaisons menant à la recherche d'échantillons, moyennant certaines précautions à leur établissement.

Un objet fractal présente la propriété d'être identique à ses parties : si on en isole un fragment qu'on agrandit, on trouve qu'il est identique à l'objet initial. L'image d'un objet fractal peut être obtenue en appliquant certaines transformations géométriques de façon répétée à une image de départ, qui se déforme pour converger vers l'image de l'objet fractal, qu'on appelle attracteur de la transformation géométrique. L'image de départ peut être choisie de façon quelconque.

Les images usuelles ne sont pas des objets fractals, mais il est cependant possible de trouver des transformations géométriques assez simples dont ces images sont les attracteurs. L'image peut alors être reconstituée par la simple connaissance d'un index exprimant ces transformations géométriques et en appliquant ces transformations plusieurs fois à une image de départ quelconque : il suffit donc d'enregistrer l'index dans la base de données, sans qu'il soit nécessaire d'enregistrer l'image elle-même sous forme numérique, ce qui serait beaucoup plus encombrant.

Les transformations géométriques sont en pratique déterminées en divisant l'image en secteurs (« ranges » en anglais) et en faisant correspondre à chacun de ces secteurs un domaine de la même image, c'est-à-dire une autre partie de l'image, en pratique de surface plus grande car les transformations géométriques convenables doivent contracter ou rapetisser les détails sur lesquelles elles s'exercent. Les correspondances par lesquelles les secteurs et les domaines sont mis en relation sont choisies pour que les domaines ressemblent aux secteurs auxquels ils sont associés, c'est-à-dire qu'ils aient un aspect similaire une fois qu'on leur a éventuellement imposé certaines modifications de luminosité, de contraste et de couleur, ou de forme par rotation ou par symétrie.

Il est essentiel que les index des images et des échantillons à chercher sur ces images soient au moins partiellement composés de la même façon, c'est-à-dire que des secteurs homologues soient mis en relation avec des domaines homologues, pour qu'ils soient comparables. Un risque important à cet égard est lié aux tailles souvent très différentes de l'image et de l'échantillon : les domaines et secteurs qu'on fait correspondre sur l'échantillon par une transformée fractale sont en général proches l'un de l'autre, alors qu'ils peuvent être beaucoup plus éloignés sur une image de grande taille ; des secteurs correspondants de l'échantillon et de l'image se verront donc généralement associer des domaines différents, celui de l'index de l'image étant hors de l'échantillon, si on ne prend pas des précautions.

Les parties correspondantes des index d'échantillon et d'image ne pourront alors pas être identiques, et la recherche sera infructueuse si cette circonstance se reproduit trop souvent. Il convient à ce propos de préciser que les domaines associés à un même secteur par les index de l'échantillon et de l'image sont choisis arbitrairement dans la plupart des procédés connus, ce qui fait que ces domaines sont généralement différents de toute manière et que la présence de l'échantillon sur l'image doit être tenue pour probable dès que des fragments assez peu nombreux de leurs index sont identiques, mais les inconvénients de cette situation sont beaucoup plus accentués si le problème signalé ci-dessus n'est pas résolu.

Le document FR-A-2 753 820 publié le 27 mars 1998, fournit une solution : on décide de limiter la distance entre chacun des secteurs des images et les domaines qui leur sont respectivement associés par l'index, ce qui permet d'associer plus probablement un secteur déterminé à des domaines identiques de l'image et de l'échantillon. Les risques de comparaison infructueuse des index, alors que l'échantillon est bien présent sur l'image examinée, seront donc réduits.

D'autres risques d'échec de la comparaison ne sont cependant pas évités en procédant ainsi : comme les transformations géométriques sont normalement définies par des coordonnées cartésiennes exprimant la distance entre les secteurs et les domaines mis en relation, la comparaison ne sera pas possible si l'échantillon et l'image sont vus à des angles différents et possèdent donc des axes de coordonnées différents ; il faut aussi veiller à ce que les divisions de l'échantillon et de l'image en domaines et secteurs soient comparables sans diviser l'image ou l'échantillon de façon trop arbitraire, c'est-à-dire en évitant de morceler les détails essentiels ou en associant des portions d'éléments très différentes à l'intérieur d'un même domaine ou d'un même secteur.

L'invention a été conçue afin de remédier à ces difficultés. Elle consiste à combiner certaines techniques de l'art de modélisation d'images -dont quelques-unes sont individuellement connues- à un procédé de composition de l'index dont l'idée ressemble à celle de la demande antérieure mais qui est moins arbitraire et plus méthodique, afin de construire des index de façon sensiblement invariante, c'est-à-dire indépendante des perturbations qui pourraient affecter l'image. Ainsi, les index de l'échantillon à rechercher et des images sur lesquelles il est présent seront ressemblants même si les images sont bruitées et si l'échantillon n'apparaît pas de la même façon.

Les bruitages, défauts et perturbations des images exercent une influence tout aussi grande sur des index fondés sur d'autres propriétés que les fractales. L'invention a pour objet de s'en affranchir dans une large mesure en rendant les index invariants ou indépendants des petites perturbations qui peuvent affecter les images et compromettre les comparaisons.

Au lieu que les divisions de l'image soient arbitraires et régulières, comme c'est le cas dans de nombreux procédés où on la divise en rectangles semblables, elles sont définies par des points d'intérêt qui, correspondent à des lieux où les images ont des propriétés qui varient fortement et qui, en pratique, sont généralement placés aux angles des détails représentés sur l'image. Ainsi ces divisions suivront mieux les contours des détails et les propriétés extraites de leurs contenus seront plus homogènes, ce qui permettra de mieux les définir et donc de les comparer avec moins d'incertitude. De plus, en imposant de construire l'index soit avec le contenu de la portion considérée, soit avec celui des portions voisines, c'est-à-dire des portions déterminées, on éliminera un élément important d'arbitraire dans la construction des index, puisqu'il ne sera plus possible de choisir les domaines et les secteurs mis en correspondance par transformée fractale, ce qui est bénéfique pour la qualité de l'image à reconstruire mais nuit aux comparaisons.

Toutefois, cela ne permettra pas encore d'obtenir une invariance des index car les points d'intérêt, qui sont le principe des divisions irrégulières des images, sont encore sensibles aux bruitages ou autres conditions de prise de vues de sorte qu'on ne peut éviter que leur liste dépende des circonstances de la prise de chaque image. Les divisions de l'image seront modifiées en conséquence, et l'invariance des index sera donc affectée. Mais on verra que cet effet néfaste sera considérablement atténué si on utilise les intersections des lignes de maillage comme sommets possibles des polygones formant les portions de l'image, et si ces polygones peuvent se recouvrir partiellement ou totalement, empiétant les uns sur les autres, ce qui n'est pas retenu dans les procédés habituels, où les index ne sont pas exploités à des fins de comparaisons mais seulement pour reconstruire les images.

L'index lui-même peut exprimer des propriétés fractales de l'image. Dans ce cas, il est conforme à l'invention que l'index exprime des mises en relation de portions différentes de l'image présentant des aspects comparables, les portions différentes comprenant des divisions de l'image et des subdivisions de l'image obtenues en morcelant les divisions, chacune des subdivisions étant mise en relation dans l'index avec chacune des divisions adjacentes à la division qui contient ladite subdivision, lesdites divisions adjacentes constituant lesdites portions voisines.

Mais il peut aussi exprimer des propriétés intrinsèques aux portions de l'image elles-mêmes. On propose alors, de les exprimer dans l'index sous forme de moments mathématiques qui permettent la quantification de ces propriétés et contribuent à assurer l'invariance des index. Ces moments sont de préférence des sommes, sur chacune des portions d'image, de termes calculés pour chaque point de ladite portion d'image et proportionnels à un paramètre exprimant un aspect du point et à une puissance déterminée d'une coordonnée barycentrique dudit point.

Les coordonnées barycentriques peuvent encore être employées pour calculer d'autres types d'index que des moments mathématiques, par exemple les transformées de Fourier ; leur avantage est qu'elles sont liées à la forme des portions de division de l'image, et donc qu'elles découlent indirectement des points d'intérêt et des éléments de l'image, mais pas de l'orientation ni de la position des éléments sur l'image.

Ces buts, caractères et avantages de l'invention, ainsi que d'autres, seront mieux compris au commentaire des figures dont l'énumération suit et qui servent à exposer le contexte technique et une réalisation particulière de celle-là :

- la figure 1 est une vue d'une image subdivisée en secteurs ;
- la figure 2 est une vue de la même image divisée en domaines ;
- la figure 3 est un graphe symbolisant un index de transformation fractale ;
- la figure 4 est une vue d'un maillage de subdivision ou de division d'une autre image ;
- la figure 5 illustre un perfectionnement de la technique de maillage ;
- la figure 6 est un schéma d'une partie de maillage expliquant un élément fondamental de l'invention ;
- la figure 7 est analogue à la figure 6 et illustre un autre aspect de l'invention,
- les figures 8A et 8B aident à saisir les conséquences de l'instabilité de points de maillage de l'image,
- et les figures 9A et 9B aident à expliquer comment ces conséquences sont amoindries avec l'invention.

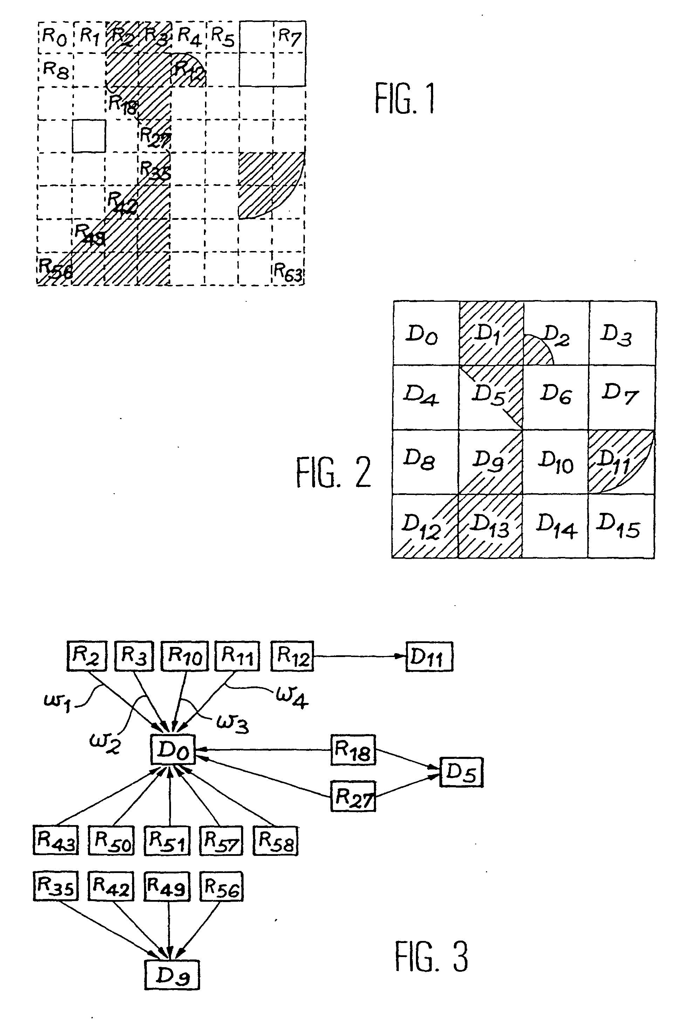

On rappelle brièvement les principes généraux de compression d'une image par un index exprimant ses propriétés fractales : la figure 1 représente une image, formée ici d'une mosaïque de deux couleurs, et on y a figuré une division en secteurs carrés, ici numérotés selon les rangées horizontales de R0 à R63, par une grille. La figure 2 représente une division de la même image en seize domaines, numérotés de la même façon de D0 à D15 et dont chacun a la surface de quatre secteurs et, comme eux, une forme carrée.

Cette image de forme simple permet de mettre en relation facilement domaines et secteurs. C'est ainsi que les secteurs R0, R1, R4, R5, etc. entièrement blancs ont une physionomie identique à un domaine entièrement blanc tel que D0 (ou D3 ou D14 par exemple) ; les secteurs entièrement noirs tels que R2 et R3 pourront être mis en relation avec un domaine entièrement noir tel que D1 ou D13, mais on pourra aussi les mettre en relation avec le domaine D0, qui possède le même aspect à un changement de luminosité près ; les secteurs tels que R18 et R27 mi-partis blanc et noir selon une diagonale seront mis en relation avec le domaine D5 de même aspect ; R35, R42, R49 et R56 avec D9 pour la même raison ; le secteur R12 sera mis en relation avec le domaine D11 qui présente le même aspect à une rotation d'un quart de tour près. On se contente de similitudes imparfaites entre domaine et secteur pour établir ces relations dans les situations pratiques.

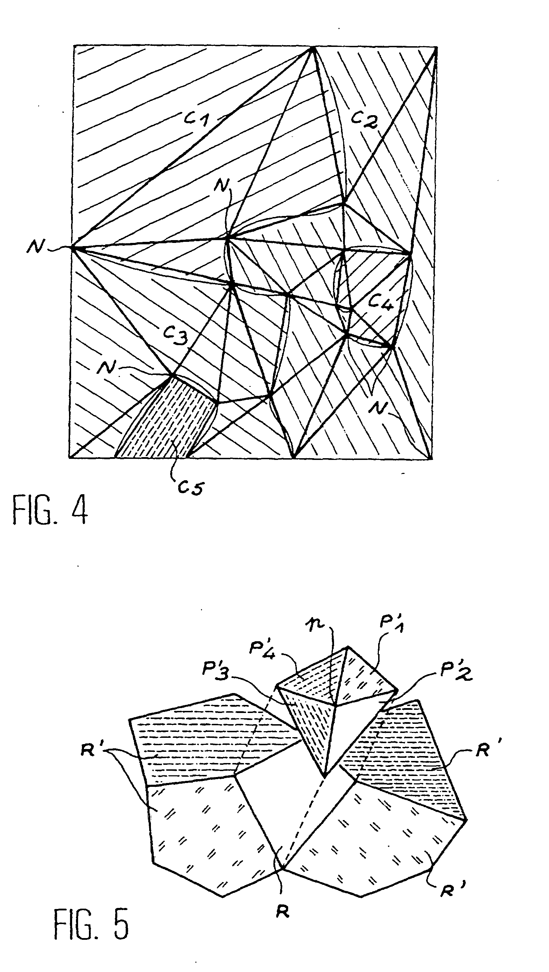

L'ensemble de ces relations de correspondance peut prendre la forme d'un graphe dont une partie est donnée à la figure 3. L'application de la transformation fractale définie par l'index consiste concrètement, partant d'une image de départ quelconque qu'on a encore divisée et subdivisée en seize domaines et soixante-quatre secteurs, à construire une nouvelle image sur laquelle on reporte, pour chacun des secteurs, le contenu du domaine de l'image de départ qui lui est associé par le graphe et l'index après lui avoir appliqué le changement d'échelle nécessaire et éventuellement les modifications de luminosité, d'orientation, etc. contenues dans l'index ; en répétant ces opérations, on convergera vers l'image de la figure 1 quelle que soit l'image de départ.

Les transformations de nature fractale qui composent l'index sont donc données par l'équation (1) : $W_i = (\gamma_i\ x_i\ y_i\ tx_i\ ty_i\ s_i\ o_i)$. Il s'agit en réalité de l'écriture d'une transformation $W_i$ sous forme vectorielle, où $\gamma_i$ est un indice désignant une isométrie parmi une liste préalablement répertoriée pour passer du domaine au secteur associé, telle qu'une rotation, une réflexion, une symétrie ou une modification d'échelle ; $xi$ et $yi$ sont les coordonnées de position du domaine ; $txi$ et $tyi$ sont les coordonnées de translation pour passer du domaine au secteur associé ; et $si$ et $oi$ sont des coefficients de contraste et de luminosité qui permettent de modifier les niveaux de gris dans le domaine pour obtenir ceux du secteur associé. Le coefficient de contraste $si$ permet de régler la différence des niveaux de gris des points d'un secteur en modifiant la différence équivalente parmi les points du domaine qui lui est associé, et le coefficient de luminosité oi permet d'éclaircir ou de foncer le secteur par rapport au domaine.

On aborde maintenant un procédé concret de création du maillage de division de l'image. Le maillage de la figure précédente était régulier et dépendait des dimensions et de l'orientation des bords de l'image, sans que la position ni la taille des détails de l'image fussent considérées. Si un objet présent sur cette image était déplacé, tourné ou représenté à une échelle différente, il serait donc divisé d'une autre façon. Comme de telles différences de position et d'orientation de contenu sont inévitables entre une image et un échantillon à retrouver, les frontières des secteurs et domaines ne coïncideraient pas sur les deux représentations de l'objet, et les index à comparer ne seraient pas construits de la même façon. C'est pourquoi on propose de remplacer un tel maillage régulier et dépendant des bords de l'image par un maillage irrégulier et établi en fonction du contenu de l'image. L'élaboration du maillage comporte alors deux étapes essentielles.

1) Sont tout d'abord créés les noeuds du maillage, également appelé sites, c'est-à-dire les points de jonction des lignes de division de l'image. Les noeuds du maillage seront en pratique des points d'intérêt de l'image, que divers procédés connus permettent de détecter. Chaque point de l'image est caractérisé en exploitant des notions de géométrie différentielle, comme les mesures de gradient et de courbure, ou encore les dérivées d'ordre 1 ou 2 dans plusieurs directions. Des heuristiques exprimées à partir de ces grandeurs permettent ensuite de classifier chaque point. Un détecteur numérique est celui de Harris, qui repose sur le calcul de la matrice hessienne H, produite à partir de l'image convoluée avec une gaussienne. Le critère de sélection des points d'intérêt est fondé sur les maximums locaux de la formule : dét (H)-k.Trace2(H), avec dét (H)=déterminant de H, k=constante et Trace2(H)=carré de la trace de H. Bien qu'on puisse imaginer plusieurs façons de procéder, on peut envisager de reconnaître des zones ou taches de différentes couleurs sur l'image et de placer les noeuds aux angles des lignes de séparation entre ces taches et aux intersections de ces lignes avec le bord de l'image. Un exemple est représenté à la figure 4, où apparaissent quatre taches C1 à C4, et les noeuds sont aux points de concours des triangles (quelques-uns sont référencés par la lettre N). On voit que le maillage est totalement irrégulier, c'est-à-dire que les noeuds sont placés à des distances très différentes. Il est recommandé d'oblitérer les parties de l'image qui sont très texturées, c'est-à-dire qui présentent des variations de couleurs répétées sur une petite superficie, comme le détail C5 qu'on a retiré de C3. De telles zones sont par exemple données par les herbes, la mer ou des murs de briques.

2) Sont ensuite construites les divisions de. l'image à partir des noeuds. Il s'agit de polygones dont les noeuds sont des sommets. Une façon simple de diviser a été proposée par Delaunay et est représentée à la figure 4 : les polygones sont tous des triangles. Ici encore des logiciels permettent de construire un réseau de triangles à partir d'un réseau de noeuds. Il est évident que d'autres façons de procéder sont possibles : on peut procéder avec des polygones différents, et tous les polygones peuvent ne pas avoir le même nombre de sommets.

Cette dernière caractéristique peut provenir d'un processus de correction du maillage : des polygones adjacents qui comprennent des régions homogènes ou presque de l'image peuvent être fondues en un seul, qui présente alors un nombre de côtés plus élevé, afin de simplifier le maillage.

La fusion des polygones permet de réduire la taille de l'index de l'image en fusionnant des polygones ayant des caractéristiques visuelles proches (présentant des index ou des caractéristiques similaires). Le polygone résultant sera considéré comme englobant une surface d'aspect intermédiaire.

On se reportera à la figure 5 pour une explication concrète d'un processus de fusion de polygones et de ses conséquences.

Un polygone formant un secteur R de l'image modélisée, ici un quadrilatère, est en réalité composé de trois morceaux d'image de niveaux de gris différents qui concourent en un point p ; le secteur R se voit attribuer un niveau de gris moyen, ce qui est peu satisfaisant car l'image devient floue et le point d'intérêt p potentiel a disparu. C'est pourquoi le maillage simplifié au secteur R sera avantageusement associé à un maillage plus fin, obtenu avant la fusion, dans lequel le secteur R sera remplacé par des polygones plus petits P'1, P'2, P'3 et P'4 qui le subdivisent et admettent un côté respectif du secteur R comme côté et le point p comme sommet ; il s'agit ici de triangles, dont chacun est confondu avec le secteur R sur un unique côté et possède deux autres côtés menant au point p. On pourrait aussi, parmi d'autres possibilités, modéliser un quadrilatère à la place des deux triangles P'3 et P'4 qui sont situés sur un même morceau du secteur R.

Il serait aussi possible d'intervenir de façon inverse, en détaillant ou divisant plus finement le maillage obtenu à l'origine : en reprenant le schéma de la figure 5, le maillage au secteur R serait d'abord créé puis la division de ce secteur R serait décidée pour former les polygones P'1, P'2, P'3 et P'4. Il serait encore concevable d'appliquer alternativement une ou plusieurs fois ces procédés de fusion et de division des polygones du maillage. Les coordonnées du point d'intérêt p ainsi créé pourront être choisies de manière à donner la division la plus nette de l'image, ou pourront être arbitraires : le point p sera alors éventuellement au barycentre du secteur R.

Les fusions de polygones permettent de diminuer la taille de l'index et accroissent donc la compression de l'image tout en pouvant effacer certains détails utiles, alors que les divisions des polygones ont l'effet inverse. On recourra donc ou non à une de ces techniques, ou aux deux à la fois, selon qu'on privilégiera la qualité de la reconstitution ou la compression de l'image.

Ce qui précède était l'exposé de techniques de caractérisation au moyen d'un index qu'on s'efforce de rendre à la fois succinct et fidèle. Toutefois, les index construits ainsi n'offrent pas une probabilité suffisante de réussite si on les utilise pour la recherche d'échantillons par comparaisons, même si, dans le cas d'index fondés sur les propriétés fractales, on recourt à la condition du brevet 96.11751 qui réduit l'arbitraire dans la sélection des domaines et secteurs mis en correspondance. Des mesures supplémentaires sont donc proposées, conformément à des perfectionnements de l'invention, pour adapter ces techniques à l'application présente.

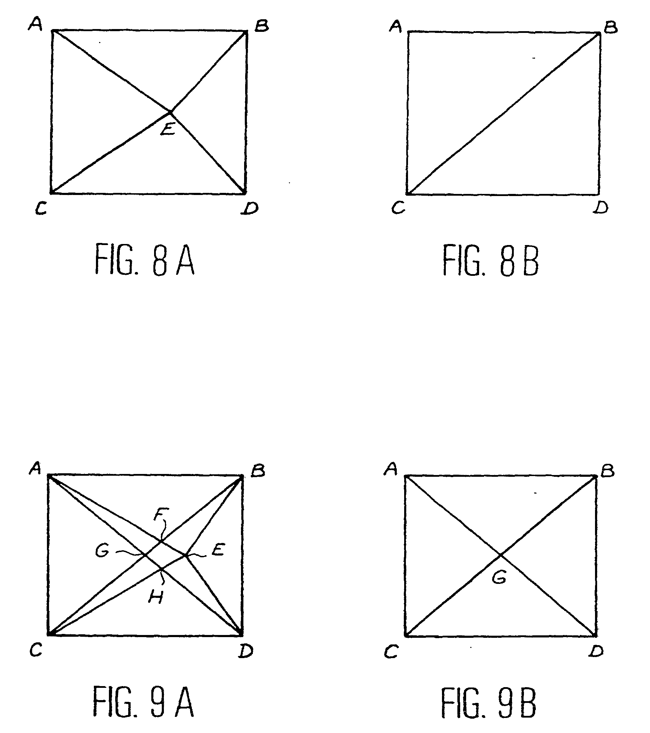

Une raison importante des insuffisances des techniques précitées provient de la sélection des points d'intérêt : quoiqu'ils soient en général à des lieux bien particuliers de l'image, comme les angles de ses principaux détails, on constate que leur liste est très sensible aux perturbations introduites par le bruitage ou par d'autres causes. On peut alors se trouver en présence de la situation des figures 8A et 8B, où une parcelle analogue est délimitée par cinq points d'intérêt A, B, C, D et E dans un cas, et par quatre (A, B, C et D) dans l'autre, le point d'intérêt E, situé entre les précédents, ayant été omis. Le maillage permettra de diviser la parcelle en quatre triangles (ABE, BDE, ACE et CDE) dans le premier cas, en deux seulement (ABC et BCD) dans l'autre, et dont aucun ne coïncidera avec les triangles précédents. Les index décrivant la parcelle seront donc complètement différents et inaptes à la comparaison.

Un procédé pour pallier cet inconvénient est la création d'un maillage redondant appelé semi-exhaustif, c'est-à-dire dans lequel les polygones de modélisation empiètent les uns sur les autres : les figures 9A et 9B représentent de tels réseaux de triangles, formés en pratique en joignant tous les points d'intérêt du maillage plus proches qu'une distance conventionnelle par des lignes de maillage, puis en prenant comme portions d'image à indexer tous les triangles formés par trois de ces lignes de maillage, dans le cas des mêmes points d'intérêt que dans les figures 8A et 8B. Un tel procédé accroît la probabilité de trouver des similitudes entre deux images sur lesquelles un même détail est présent, même si des points d'intérêt sont omis sur l'une ou l'autre modélisation. Concrètement, trois nouveaux points d'intérêt F, G et H, aux intersections des lignes AE et BC, AD et BC, et CE et AD respectivement, apparaissent, et on admet comme triangles de modélisation de l'image tous ceux qui admettent trois de ces points d'intérêt A à H comme sommets et dont les côtés sont des lignes de maillage : on en trouve ici vingt et un (ABC, ABD, ABE, ABF, ABG, ACD, ACE, ACF, ACG, ACH, ADE, BCD, BCE, BDE, BDG, BEF, CDE, CDG, CDH, CEF, DEH) ; le même procédé de modélisation, en l'absence du point E et par conséquent des points F et H, permet de modéliser la parcelle en huit triangles (ABC, ABD, ABG, ACD, ACG, BCD, BDG, CDG), beaucoup moins nombreux mais tous identiques à certains de ceux du maillage de la figure 9A, ce qui permettra de construire des index partiellement identiques et donc comparables, puisqu'on se contentera d'un pourcentage déterminé de lignes semblables dans les index pour estimer que la comparaison est positive.

Le perfectionnement relatif au maillage semi-exhaustif est inadapté à la compression de l'image et impose des temps de calcul beaucoup plus importants pour la coder en index, mais il est justifié pour cette application.

Si l'image doit être reconstruire à partir d'index, on préférera utiliser un index ordinaire, produit à partir d'une division de l'image sans empiétement des polygones. La base de données contiendra alors deux index pour chacune des images, dont l'un servira à la recherche d'échantillons et l'autre à la reconstitution.

Même si les points d'intérêt peuvent facilement être omis quand l'image est perturbée, ils tendent à conserver une disposition d'ensemble invariante car ils dépendent de la forme des éléments de l'image : si ces éléments se retrouvent à des positions différentes sur deux images, les points d'intérêt seront déplacés par groupes, et les zones entourées par ces groupes seront modélisées de la même façon, par des portions semblables. Le maillage défini par des points d'intérêt favorise donc non seulement une division de l'image en portions plus homogènes, ce qui serait un avantage pour la compression d'images, mais aussi les recherches à partir des index, qui resteront fructueuses même si l'objet de la recherche n'est pas à la même position ou à la même inclinaison sur l'image et sur l'échantillon.

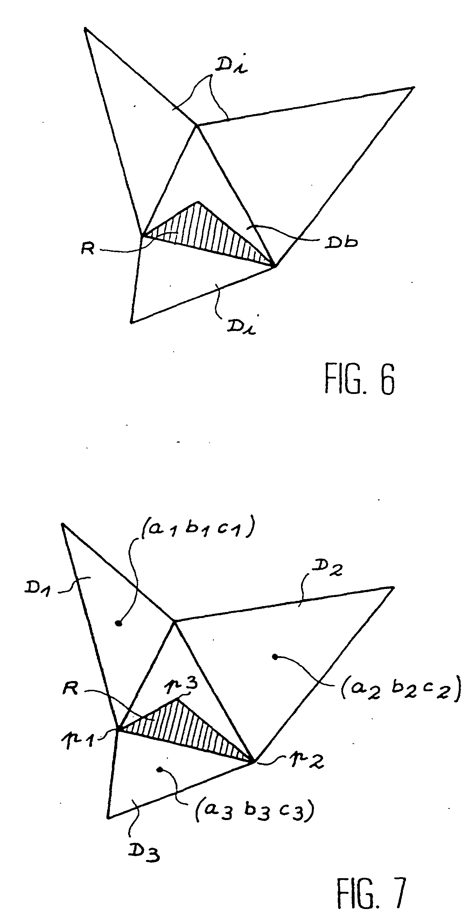

Mais comme les index établis avec les propriétés fractales ne sont pas associés à des secteurs d'image mais à des relations entre des secteurs et des domaines, un maillage identique ne suffit pas à garantir des comparaisons fructueuses entre un échantillon et une image, car il faut que les secteurs identiques soient associés à des domaines identiques. Une autre caractéristique de ce mode de réalisation, qui va maintenant être décrite en liaison à la figure 6, offre une solution à cette difficulté. On y a représenté des domaines D de la modélisation de l'image, qui sont subdivisés en secteurs (« ranges ») R. Domaines et secteurs sont supposés triangulaires, mais le procédé proposé ici est applicable à n'importe quelle forme polygonale. L'index de la transformation fractale de l'image, peut être établi en associant à chacun des secteurs R, l'ensemble des domaines $(D_i)$ adjacents par des côtés au domaine $(D_b)$ auquel appartient le secteur R, et dont le nombre est égal à celui des côtés du domaine $D_b$. Il peut également être établi à partir de la décomposition de l'image en polygones pris comme des blocs de domaine ; la répartition en blocs de secteur est obtenue en dissociant chaque triangle de trois autres triangles en utilisant le barycentre au triangle de départ ; chaque triangle de secteur est caractérisé en utilisant le triangle de domaine qui le contient. On s'aperçoit que l'index devient alors entièrement déterminé par la forme du maillage, et donc que des index très ressemblants pourront toujours être obtenus pour un même objet présent sur des images différentes à condition de choisir un procédé de création du maillage qui ne dépende que du contenu de l'image, tel que celui qui a été exposé plus haut.

L'index peut consister, comme il est usuel, en une collection de valeurs correspondant aux paramètres de l'équation (1), c'est-à-dire qui indique en particulier les coordonnées cartésiennes $x_i$ et $y_i$ de chacun des domaines $D_i$ de départ et les coordonnées de translation $tx_i$ et $ty_i$ qui mènent de ces domaines $D_i$ au secteur R qui leur est associé. Cette façon de procéder présente cependant l'inconvénient que les coordonnées x et y dépendent de la position de l'objet sur l'image et que les coordonnées tx et ty dépendent de l'orientation de l'objet sur l'image. On propose donc d'utiliser des paramètres différents, et en particulier de se servir des coordonnées barycentriques de chacun des secteurs R pour renforcer encore l'invariance des index.

Les coordonnées barycentriques d'un ensemble de points, tels que les sommets d'un triangle (A, B, C), sont des nombres $\alpha$, $\beta$, $\gamma$ en nombre égal à celui des points de référence A, B, C et qui définissent la position d'un point p quelconque par $p=\alpha A+\beta B+\gamma C$, en fonction donc des positions des points A, B et C. La relation $\alpha+\beta+\gamma=1$ est respectée sur le périmètre du triangle ABC, et de plus $\alpha$, $\beta$ et $\gamma$ sont tous compris entre O et 1 à l'intérieur de ce périmètre.

Les transformations géométriques faisant passer d'un domaine D à un secteur R tous deux polygonaux à même nombre de sommets peuvent être décomposées en une translation, une isométrie (rotation, symétrie, etc.) et une déformation. L'index de la transformation fractale devra alors contenir des coefficients numériques exprimant les importances respectives de ces trois opérations pour chacune des relations entre domaine et secteur, la totalité de ces coefficients si l'index doit être exploité pour reconstituer l'image de la façon indiquée plus haut ou tout au moins une partie des coefficients si l'index ne sert qu'à des comparaisons. Quoi qu'il en soit, la transformation fractale peut être symbolisée par une série d'équations (2) :

$$w\left(D_i\right) = \tilde{R} = \sum_{j=0}^{d-1} a_i^d \alpha j + s_i \varphi(D_i) + t_i \quad (2),$$

où $D_i$ et R désignent donc un domaine et un secteur mis en relation, l'indice « ~ » exprime que la transformation fractale $w_k$ ne permet de reconstituer qu'approximativement le secteur R, $a_i^d$, $s_i$ et $t_i$ sont les coefficients mentionnés ci-dessus des transformations géométriques, où $t_i$ quantifie la translation sur l'image, $s_i$ l'isométrie $\varphi$ et $a_i^d$ la déformation. $s_i$ peut être une valeur d'angle pour une rotation, $t_i$ des coordonnées polaires exprimant la distance entre les barycentres du domaine $D_i$ et du secteur $\tilde{R}$ et la direction d'une droite joignant ces deux points, et $a_i^d$ sont des coefficients donnant des coordonnées barycentriques du secteur $\tilde{R}$ en fonction des coordonnées barycentriques $\alpha_j$ du domaine $D_i$ ; j désigne enfin le nombre de sommets des polygones.

Si domaines D et secteur R sont triangulaires, les équations (2) deviennent :

$$w\left(D_{\alpha,\beta,\gamma}^i\right) = \tilde{R} = a_i\alpha + b_i\beta + c_i\gamma + s_i\varphi(D_i) + t_i \qquad (3).$$

Il est cependant conforme à l'invention d'incorporer à l'index les transformations w mettant en relation tous les domaines $D_i$, adjacents au domaine $D_b$ auquel appartient le secteur R, et ce secteur R, de sorte que la transformation globale permettant d'obtenir le secteur $\tilde{R}$ est redondante et se compose de k équations (2) ou (3), où k désigne le nombre de domaines $D_i$ concernés pour donner les équations (4) en partant des équations (3) :

$$w_k\left(D_{\alpha,\beta,\gamma}^{i=1,k}\right) = \tilde{R} = \sum_{i=1}^{k} (a_i\alpha + b_i\beta + c_i\gamma + s_i\varphi(D_i) + t_i \qquad (4).$$

Les transformations fractales $w_k$ peuvent s'exprimer par des vecteurs de coordonnées (ou des matrices à k lignes) V :

$$V = [(a_i), (b_i), (c_i), (s_i), (t_i)] \qquad (5),$$

où i varie de l au nombre de domaines $D_i$ considérés, en général trois si tous les domaines sont triangulaires, sauf aux bords de l'image.

On a vu que les coefficients a, b et c ne dépendaient ni de la position, ni de l'échelle, ni de l'orientation sur l'image de l'objet servant de support aux domaines D et aux secteurs R mis en relation, grâce à l'emploi de coordonnées barycentriques. Il sera avantageux de définir les coordonnées de translation $t_i$ pour obtenir la même indépendance. Par exemple, la distance et la direction du déplacement correspondant à cette translation pourront être exprimées en prenant comme référence non les dimensions et l'orientation de l'image, mais celles du domaine D.

On a développé l'exposé de l'invention jusqu'ici en relation avec des index établis d'après les propriétés fractales, car ces index ont largement été développés pour comprimer puis reconstruire des images. Mais l'invention peut être appliquée à d'autres genres d'index, puisque les critères proposés (points d'intérêt, points d'intérêt supplémentaires, maillage semi-exhaustif, coordonnées barycentriques) ne dépendent pas du contenu des portions de l'image. les index peuvent tout naturellement exprimer, au lieu de relations entre les portions respectives de l'image et d'autres de ces portions, les contenus des portions elles-mêmes. On peut ainsi utiliser des moments m d'ordre $n$ de coordonnées barycentriques, qui peuvent être définis par les équations (6) pour un polygone triangulaire tel qu'un des secteurs R défini par ses coordonnées barycentriques :

$$m_\alpha^n = \int_R \alpha^n.(k - \bar{k})$$
$$m_\beta^n = \int_R \beta^n.(k - \bar{k}) \qquad (6),$$
$$m_\gamma^n = \int_R \gamma^n.(k - \bar{k})$$

où $\alpha^n(k-\bar{k})$, par exemple, est la puissance à l'ordre n de la coordonnée barycentrique $\alpha$ d'un point du secteur R multipliée par un coefficient k qui caractérise ce point et peut être son niveau de gris ; $\bar{k}$ désigne la moyenne de ce coefficient sur tous les points du secteur R.

L'index contient ainsi les moments de la distribution des points d'image (pixels) contenus dans chaque polygone à différents ordres, exprimés à partir des coordonnées barycentriques.

En pratique, on peut introduire une pondération par la fonction gaussienne $G(\alpha,\beta,\gamma)$ afin de ne pas favoriser l'influence de points éloignés du barycentre, et de réduire ainsi la sensibilité du calcul aux erreurs de positionnement des sommets du secteur R ; les équations (6) deviennent alors (7) :

$$m_\alpha^n = \int_R \alpha^n(k - \bar{k}).G(\alpha, \beta, \gamma)$$
$$m_\beta^n = \int_R \beta^n(k - \bar{k}).G(\alpha, \beta, \gamma) \qquad (7)$$
$$m_\gamma^n = \int_{PR} \gamma^n(k - \bar{k}).G(\alpha, \beta, \gamma)$$

On fait alors correspondre à un secteur R ses moments d'ordre 0 à n ; le vecteur V de l'équation (5) est alors remplacé par un vecteur V' (8) :

$$V' = \frac{1}{\sigma\sqrt{2\pi}} e^{-\frac{(\alpha^2 + \beta^2 + \gamma^2)}{2\sigma^2}} \left[ m_\alpha^i, \ m_\beta^i, \ m_\gamma^i \right] \ (8) \ .$$

Les polygones ont ainsi été caractérisés en utilisant des relations fondées sur le contraste et la luminosité, c'est-à-dire sur des niveaux de gris. Il serait possible de les caractériser par leur couleur, voire par leur texture, en utilisant une transformée de Fourier par exemple. Dans toutes ces variantes du procédé fondé sur les moments, on ne met donc pas en relation des secteurs aux domaines, mais les éléments du maillage ne sont caractérisés que par les propriétés de leurs points.

La recherche de l'échantillon sur une image est menée de façon habituelle : l'échantillon est comprimé de la même façon que les images pour obtenir un index d'échantillon composé de vecteurs, tels que V et V' rencontrés plus haut, qu'on compare individuellement aux vecteurs de l'image considérée. Un critère de ressemblance des vecteurs est introduit pour décider si un vecteur d'échantillon peut être corrélé à un vecteur d'image. Si la recherche de corrélation est positive pour un certain nombre de vecteurs, on s'intéresse à déterminer l'organisation spatiale de ces vecteurs corrélés de l'échantillon pour vérifier si elle coïncide suffisamment avec celle des vecteurs correspondants de l'image en tenant compte de ce que la position et l'orientation de l'échantillon peuvent être quelconques sur l'image s'il s'y trouve effectivement. On calcule pour cela les distances et les angles entre les deux ensembles de vecteurs ainsi corrélés, par des formules mathématiques usuelles. Il existe plusieurs façons de calculer une distance vectorielle, mais la distance euclidienne est en général un bon critère de corrélation pour cette application. Un score de localisation est finalement calculé en évaluant la corrélation des distances et angles entre vecteurs correspondants entre les deux index : l'image peut être extraite de la base de données par le chercheur si ce score lui semble prometteur. Comme on l'a déjà signalé, l'image peut être consultée par tous les moyens, selon qu'il en subsiste une représentation matérielle, numérique dans une mémoire ou seulement l'index, l'image étant alors reconstituée en appliquant la transformation géométrique que ses vecteurs définissent.

L'invention peut présenter de l'intérêt pour un certain nombres de domaines dont la télédétection où des images aériennes de satellite sont exploitées, l'imagerie médicale par tomographie, la publicité, où il peut être utile de retrouver des images composées antérieurement, et la surveillance et la sécurité pour localiser des défauts ou des comportements anormaux des systèmes. Elle peut trouver plus précisément utilité quand le volume d'images enregistré est considérable ou pour identifier un détail précis, un visage par exemple.

EP 1 088 279 B1

**Revendications**

1. Procédé de recherche d'images porteuses d'un échantillon dans une banque de données d'images, où les images et l'échantillon sont représentés par des index, l'index de l'échantillon est comparé successivement aux index des images, en ce que les index sont établis, après un morcellement des images en portions, en exprimant des propriétés des contenus des portions, **caractérisé en ce que** les portions des images sont créées : en recherchant des points d'intérêt des images, là où les contenus des images varient fortement ; en joignant les points d'intérêt par des lignes de maillage ; et en sélectionnant comme portions des polygones admettant comme sommets les points d'intérêt ; et **en ce que** les index sont établis, pour chacune des portions, à partir soit du contenu de ladite portion, soit de contenus d'un ensemble déterminé de portions voisines de ladite portion.

2. Procédé de recherche d'image selon la revendication 1, **caractérisé en ce que** les portions voisines d'une des portions sont des portions qui ont un côté de polygone commun à ladite portion.

3. Procédé de recherche d'image selon l'une quelconque des revendications 1 ou 2, **caractérisé en ce que** l'on sélectionne également comme portions des polygones admettant comme sommets des intersections des lignes de maillage.

4. Procédé de recherche d'image selon l'une quelconque des revendications 1 à 3, **caractérisé en ce que** certaines des portions sont au moins partiellement incluses dans d'autres des portions.

5. Procédé de recherche d'images selon l'une au moins des revendications 1 à 4, **caractérisé en ce que** les polygones sont tous triangulaires.

6. Procédé de recherche d'images selcn l'une au moins des revendications 1 à 5, **caractérisé en ce que** les portions sont créées au moyen d'une étape supplémentaire, finale, comprenant des divisions de portions hétérogènes et des fusions de portions ayant des contenus analogues.

7. Procédé de recherche d'images selon l'une au moins des revendications précédentes, **caractérisé en ce que** chacune des images est associée à au moins un second index, utilisé pour reconstruire l'image, établi en morcelant les images en portions qui n'empiètent pas les unes sur les autres.

8. Procédé de recherche d'image selon l'une au moins des revendications précédentes, **caractérisé en ce que** les propriétés exprimées par les index sont des propriétés fractales des images qui associent respectivement lesdites portions à une autre catégorie de portions, produites par un morcellement différent des images.

9. Procédé de recherche d'images selon l'une au moins des revendications 1 à 7, **caractérisé en ce que** les propriétés exprimées par les index sont établies dans chacune des portions au moyen de valeurs calculées sur tous les points de ladite portion en utilisant des coordonnées barycentriques desdits points.

10. Procédé de recherche d'images selon la revendication 9, **caractérisé en ce que** les valeurs calculées sont des moments mathématiques.

**Patentansprüche**

1. Verfahren zur Suche von ein Muster aufweisenden Bildern in einer Bild-Datenbank, in dem die Bilder und das Muster von Indizes dargestellt werden, der Index des Musters sukzessive mit den Indizes der Bilder verglichen wird, indem die Indizes nach einem Aufstückeln der Bilder in Abschnitte erstellt werden, wobei die Eigenschaften der Inhalte der Abschnitte ausgedrückt werden,
    **dadurch gekennzeichnet, dass** die Bildabschnitte erzeugt werden:

    indem interessierende Punkte der Bilder dort, wo sich die Inhalte der Bilder stark unterscheiden, gesucht werden;
    indem die interessierenden Punkte durch Netzlinien miteinander verbunden werden; und
    indem als Abschnitte Polygone ausgewählt werden, welche als Eck- bzw. Scheitelpunkte die interessierenden Punkte aufweisen; und
    indem für jeden der Abschnitte die Indizes entweder anhand des Inhalts des Abschnitts oder der Inhalte einer

9

von den dem Abschnitt benachbarten Abschnitten bestimmten Einheit erstellt werden.

2. Bildsuchverfahren nach Anspruch 1, **dadurch gekennzeichnet, dass** die zu einem der Abschnitte benachbarten Abschnitte Abschnitte sind, die eine mit dem Abschnitt gemeinsame Polygonseite aufweisen.

3. Bildsuchverfahren nach einem der Ansprüche 1 oder 2, **dadurch gekennzeichnet, dass** auch Polygone als Abschnitte ausgewählt werden, welche Schnittpunkte der Netzlinien als Eck- bzw. Scheitelpunkte aufweisen.

4. Bildsuchverfahren nach einem der Ansprüche 1 bis 3, **dadurch gekennzeichnet, dass** bestimmte der Abschnitte mindestens teilweise in anderen der Abschnitte enthalten sind.

5. Bildsuchverfahren nach einem der Ansprüche 1 bis 4, **dadurch gekennzeichnet, dass** die Polygone alle dreieckig sind.

6. Bildsuchverfahren nach einem der Ansprüche 1 bis 5, **dadurch gekennzeichnet, dass** die Abschnitte über einen zusätzlichen, abschließenden Schritt erstellt werden, der Unterteilungen heterogener Abschnitte und Fusionen von Abschnitten mit analogen Inhalten umfasst.

7. Bildsuchverfahren nach einem der vorangehenden Ansprüche, **dadurch gekennzeichnet, dass** jedes der Bilder mindestens einem zweiten Index zugeordnet wird, der für die Rekonstruktion des Bildes verwendet wird, und der erstellt wird, indem die Bilder in Abschnitte, die einander nicht überlagern, gestückelt werden.

8. Bildsuchverfahren nach einem der vorangehenden Ansprüche, **dadurch gekennzeichnet, dass** die von den Indizes ausgedrückten Eigenschaften fraktale Eigenschaften der Bilder sind, welche jeweils die Abschnitte einer anderen Abschnittskategorie, die durch eine unterschiedliche Stückelung der Bilder erzeugt wird, zuordnen.

9. Bildsuchverfahren nach einem der Ansprüche 1 bis 7, **dadurch gekennzeichnet, dass** die von den Indizes ausgedrückten Eigenschaften in jedem der Abschnitte mittels Werten erstellt werden, welche für alle Punkte des Abschnitts berechnet werden, indem baryzentrische bzw. Schwerpunkt-Koordinaten der Punkte verwendet werden.

10. Bildsuchverfahren nach Anspruch 9, **dadurch gekennzeichnet, dass** die berechneten Werte mathematische Momente sind.

## Claims

1. Method of searching for images carrying a sample in a bank of image data, where the images and the sample are represented by indices, the index of the sample is compared successively with the indices of the images, the indices are drawn up, after breaking up the images into portions, by expressing properties of the contents of the portions, **characterized in that** the portions of the images are created; by searching for points of interest of the images, corresponding to places where the images have contents which vary greatly; by joining the points of interest by mesh lines; and by selecting as portions polygons which have the points of interest as vertices and **in that** the indices are drawn up, for each of the portions, from either the content of said portion or the contents of a defined assembly of portions which are neighbours of said portion.

2. Method of searching for an image according to claim 1, **characterized in that** the portions adjacent to one of the portions have a polygon side common to said portion.

3. Method of searching for an image according to either of the claims 1 and 2, **characterized in that** polygons having intersections of mesh lines as vertices are also selected as a portion.

4. Method of searching for an image according to any one of the claims 1 to 3, **characterized in that** certain of the portions are at least partially included in other portions.

5. Method of searching for images according to at least one of the claims 1 to 4, **characterized in that** the polygons are all triangular.

6. Method of searching for images according to at least one of claims 1 to 5, **characterized in that** the portions are

**EP 1 088 279 B1**

created by means of a supplementary and final step, comprising division of heterogeneous portions and fusion of portions having analogous contents.

7. Method of searching for images according to at least one of the preceding claims, **characterized in that** each of the images is associated with at least one second index, used to reconstruct the image, drawn up by breaking up the images into portions which do not encroach upon one another.

8. Method of searching for an image according to at least one of the preceding claims, **characterized in that** the properties expressed by the indices are fractal properties of the images which respectively associate said portions with another category of portions, produced by a different breaking up of the images.

9. Method of searching for images according to at least one of the claims 1 to 7, **characterized in that** the properties expressed by the indices are drawn up in each of the portions by means of values calculated on all the points of said portion using barycentric coordinates of said points.

10. Method of searching for images according to claim 9, **characterized in that** the calculated values are mathematical moments.

FIG. 1

FIG. 2

FIG. 3

FIG. 4

FIG. 5

FIG. 6

FIG. 7

FIG. 8 A

FIG. 8 B

FIG. 9 A

FIG. 9 B